# EUROPEAN PATENT APPLICATION

(11) **EP 3 502 165 A1**
(43) Date of publication of application: **26.06.2019**
(21) Application number: 17306900.6
(22) Date of filing: 22.12.2017
(51) Int. Cl.: C08G 69/26, C08G 69/28

(54) **PROCESS FOR PREPARING A COPOLYAMIDE WITHOUT ENCRUSTATION IN THE AUTOCLAVE**

(71) Applicant: RHODIA OPERATIONS, 75009 Paris (FR)
(72) Inventor: The designation of the inventor has not yet been filed
(74) Representative: Chatelan, Florence Anne

(57) **Abstract**

The present invention relates to a novel process for the production of a copolyamide comprising a polymerization product of hexamethylene diamine, adipic acid and terephthalic acid.

## Description

### FIELD OF THE INVENTION

The present invention relates to a process for preparing a copolyamide by polymerizing the monomers adipic acid, hexamethylene diamine and terephthalic acid.

### BACKGROUND

Polyamides are a subclass of specialized polymers. They occur both naturally and artificially. Synthetically obtained polyamides have achieved great importance in the chemical industry and for society in general due to their extraordinary properties. In the chemical industry polyamides are usually obtained by condensation reactions of their monomers in a step growth reaction. The resulting product is composed of the monomer units under loss of water. In the product the monomer units are connected by amide bonds. Sometimes the monomers can be amides themselves as in caprolactam. But usually the monomers exhibit an amino group and/or a carboxyl group.

According to the composition of their main chain that can be aliphatic, semi-aromatic or aromatic, synthetic polyamides are classified into three different polyamide-families, which are aliphatic polyamides, polyphthalamides or aramides. Often the chain-length of the monomers is used to define the name of the reaction product, as for example in the well-known polyamides PA6, PA66 and PA6T. When two or more polyamides unite together the resulting product is called a copolyamide, as for example PA66/6T which is prepared in the process that is the subject-matter of the present invention. Several prior art processes for the production of PA66/6T are disclosed in DE929151 A, US4603166 A, US4762910 A, JP61159422 A2, JP7082372 A2, JP7138366 A2, US5708125 A, US5663284 A, JP8059824 A2, US2002077419 A1, US2007043185 A1, CN103360598 A, CN104163918 A and US2016145390 A1. Other related documents are US3382216 A and US5378800 A.

During the synthetic processes for preparing desired polyamides and copolyamides it is a common problem that unwanted side reactions occur. The resulting by-products often lead to encrustations in the used autoclaves. These encrustations have to be removed periodically by extensive cleaning. Overall these side reactions lead to both costly and time-consuming down-times.

Additionally, it is a common problem, that at the required temperatures for the different polymerization processes the obtained polymers are not sufficiently fluid to be suitable for injection-molding applications. Trying to increase fluidity by increasing the temperature often leads to decomposition of at least part of the polymer and therefore lower yields of the desired product.

To date, these problems have not been satisfactorily resolved.

### SUMMARY OF THE INVENTION

The inventors of this patent application observed that during the preparation of PA66/6T by polymerization in an autoclave under pressure substantial encrustation of the autoclave occurs which necessitates frequent interruptions for autoclave cleaning.

The inventors surprisingly found that if, during the early stage of the process (polymerization under pressure), the temperature of the reaction mass is increased above the melting point of the final polymer, then the encrustation phenomenon in the autoclave is drastically reduced. As a consequence, less maintenance interruptions for autoclave cleaning are necessary. In addition, a better polymer quality (i.e. not contaminated by degraded residues) can be achieved. Contamination by degraded residues impairs the quality and regularity of the polymer flow during the granulating phase, leading to cut defects, jamming strands with interruptions of pelletizing phase, plugging of die plate holes, etc..

Compared to the prior art the present patent application therefore facilitates a process for the polymerization of copolyamides such as PA66/6T, wherein during the polymerization under pressure a temperature just above the melting point of the target polymer is reached. Also the process time in the autoclave is generally shorter than in the prior art. This is advantageous and innovative since no encrustations are observed in the autoclave at the given parameters.

The invention therefore relates to the subject-matter defined in the following items [1] to [49]:
[1] A batch process for the production of a copolyamide comprising less than 50 mol % of units of hexamethylene terephthalamide, said process comprising:
   (a) introducing an aqueous solvent and the monomers adipic acid, terephthalic acid and hexamethylene diamine, or salts thereof into an evaporator to obtain a mixture;
   (b) concentrating the mixture obtained in step (a) in the evaporator by evaporation of at least part of the solvent, to obtain a concentrated mixture;
   (c) transferring the concentrated mixture obtained in step (b) into an autoclave;
   (d) polymerizing the monomers in the autoclave at a pressure of at least 1.2 MPa by increasing the temperature up to a temperature which is higher than the melting point of the copolyamide;
   (e) releasing the pressure in the autoclave by decompression;
   (f) allowing the polymerization to continue in the autoclave; and
   (g) granulating the copolyamide obtained in step (f);
   wherein the total duration of steps (d) + (e) + (f), in particular of steps (c) + (d) + (e) + (f) + (g) is less than 9 h, preferably less than 6 h.
[2] The process according to item 1, wherein the aqueous solvent is water.
[3] The process of item 1 or 2, wherein the process further comprises providing, prior to step (a) of item 1, a first aqueous solution comprising hexamethylene diamine and adipic acid, wherein the total concentration of monomers is in the range from 40 to 68 wt.-%, and a second aqueous solution comprising hexamethylene diamine and terephthalic acid, wherein the total concentration of monomers is less than 50 wt.-%; and introducing the first aqueous solution and the second aqueous solution into the evaporator in step (a) of item 1.
[4] The process of item 3, wherein the total concentration of monomers in the first aqueous solution is in the range from 43 to 64 wt.-%, and/or the total concentration of monomers in the second aqueous solution is from 32 to 48 wt.-%.
[5] The process of item 3, wherein the total concentration of monomers in the first aqueous solution is in the range from 46 to 60 wt.-%, and/or the total concentration of monomers in the second aqueous solution is in the range from 35 to 45 wt.-%.
[6] The process of item 3, wherein the total concentration of monomers in the first aqueous solution is in the range from 49 to 56 wt.-%, and/or the total concentration of monomers in the second aqueous solution is in the range from 38 to 42 wt.-%.
[7] The process according to item 3, wherein the total concentration of monomers in the first aqueous solution is about 52 wt.-%, and/or the total concentration of monomers in the second aqueous solution is about 40 wt.-%.
[8] The process according to any one of items 3 to 7, wherein prior to step (a) the first aqueous solution has a temperature of 50 to 65°C, and/or the second aqueous solution has a temperature of 75 to 105°C.
[9] The process according to any one of items 3 to 7, wherein prior to step (a) the first aqueous solution has a temperature of 55 to 60°C, and/or the second aqueous solution has a temperature of 80 to 100°C.
[10] The process according to any one of items 3 to 7, wherein prior to step (a) the second aqueous solution has a temperature of 85 to 95°C.
[11] The process according to any one of items 3 to 10, wherein the molar ratio of hexamethylene diamine to adipic acid in the first aqueous solution is 0.9 to 1.1.
[12] The process according to any one of items 3 to 11, wherein the molar ratio of hexamethylene diamine to terephthalic acid in the second aqueous solution is 0.9 to 1.1.
[13] The process according to any one of items 3 to 10, wherein the molar ratio of hexamethylene diamine to adipic acid in the first aqueous solution is substantially equimolar and/or the molar ratio of hexamethylene diamine to terephthalic acid in the second aqueous solution is substantially equimolar.
[14] The process according to any one of items 1 to 13, wherein the monomers are introduced into the evaporator in a way that the molar ratio of terephthalic acid to adipic acid in the mixture obtained in step (a) of item 1 is less than 1.
[15] The process according to any one of items 1 to 13, wherein the mixture obtained in step (a) of item 1 further comprises a chain-limiting agent, at a concentration of 50 to 80 mmol/kg of the final polymer.
[16] The process according to any one of items 1 to 13, wherein the mixture obtained in step (a) of item 1 further comprises a chain-limiting agent, at a concentration of 60 to 75 mmol/kg of the final polymer.
[17] The process according to any one of items 1 to 13, wherein the mixture obtained in step (a) of item 1 further comprises a chain-limiting agent, at a concentration of about 71 mmol/kg of the final polymer.
[18] The process according to any one of items 15 to 17, wherein said chain-limiting agent is acetic acid.
[19] The process of any one of the preceding items, wherein the mixture obtained in step (a) of item 1 further comprises an anti-foaming agent at a concentration of 5 to 25 ppm.
[20] The process of any one of the preceding items, wherein the mixture obtained in step (a) of item 1 further comprises an anti-foaming agent at a concentration of 10 to 20 ppm.
[21] The process of any one of the preceding items, wherein the mixture obtained in step (a) of item 1 further comprises an anti-foaming agent at a concentration of 12 to 18 ppm.
[22] The process of any one of the preceding items, wherein the mixture obtained in step (a) of item 1 further comprises an anti-foaming agent at a concentration of 14 to 16 ppm.
[23] The process according to any one of items 19 to 22, wherein the anti-foaming agent is a polydimethylsiloxane-based compound.
[24] The process according to any one of the preceding items, wherein the temperature of the mixture reaches a temperature value in the range from 135 to 160°C during the evaporation.
[25] The process according to any one of the preceding items, wherein the temperature of the mixture reaches a temperature in the range from 140 to 155°C during the evaporation.
[26] The process according to any one of the preceding items, wherein the temperature of the mixture reaches a temperature in the range from 145 to 150°C during the evaporation.
[27] The process according to any one of the preceding items, wherein the pressure in the evaporator during the evaporation is in the range from 0.25 to 0.35 MPa.
[28] The process according to any one of the preceding items, wherein the pressure in the evaporator during the evaporation is in the range from 0.28 to 0.32 MPa.
[29] The process according to any one of the preceding items, wherein the pressure in the evaporator during the evaporation is about 0.30 MPa.
[30] The process according to any one of the preceding items, wherein step (b) comprises evaporating the solvent until the concentration of the solvent in the concentrated mixture is 20 to 30 wt.-%.
[31] The process according to any one of the preceding items, wherein step (b) comprises evaporating the solvent until the concentration of the solvent in the concentrated mixture is about 25 wt.-%.
[32] The process according to any one of the preceding items, wherein the maximum temperature in step (d) is at least 282°C, preferably at least 285°C.
[33] The process according to any one of the preceding items, wherein the maximum temperature in step (d) is in the range from 285 to 290°C.
[34] The process according to any one of the preceding items, wherein the maximum temperature in step (d) is about 288°C.
[35] The process according to any one of the preceding items, wherein the maximum temperature in step (d) exceeds the melting point of the copolyamide by 3 to 12°C.
[36] The process according to any one of the preceding items, wherein the maximum temperature in step (d) exceeds the melting point of the copolyamide by 5 to 10°C.
[37] The process according to any one of the preceding items, wherein the temperature during the decompression is in a range from 288 to 293°C.
[38] The process according to any one of the preceding items, wherein step (f) is carried out for 10 to 20 minutes with a final temperature within the range from 291 to 295°C.
[39] The process according to any of the preceding items, wherein the pressure in the autoclave in step (d) is at least 1.5 MPa.
[40] The process according to any one of the preceding items, wherein the melting-point of the produced copolyamide is in a range from 272 to 290°C, or from 274 to 288°C, or from 276 to 285°C, or from 278 to 282°C, preferably about 280°C.
[41] The process according to any one of the preceding items, wherein the copolyamide comprises from 30 to 40 mol-% of polyamide 6T and from 60 to 70 mol-% of polyamide 66.
[42] The process according to any one of the preceding items, wherein the copolyamide comprises about 35 mol-% of polyamide 6T and about 65 mol-% of polyamide 66.
[43] The process according to any one of the preceding items, wherein the total duration of steps (d) + (e) + (f) is less than 6 hours.
[44] The process according to any one of the preceding items, wherein during step (e) the temperature of the reaction mixture obtained from step (d) is higher than the melting point of the copolyamide.
[45] The process according to any one of the preceding items, wherein during step (e) the temperature of the reaction mixture obtained from step (d) is maintained at a temperature higher than the melting point of the copolyamide.
[46] The process according to item 44 or 45, wherein step (e) comprises heating the reaction mixture obtained from step (d).
[47] The process according to any one of the preceding items, wherein during step (f) the temperature of the reaction mixture obtained from step (e) is higher than the melting point of the copolyamide.
[48] The process according to any one of the preceding items, wherein during step (f) the temperature of the reaction mixture obtained from step (e) is maintained at a temperature higher than the melting point of the copolyamide.
[49] The process according to item 47 or 48, wherein step (f) comprises heating the reaction mixture obtained from step (e).

### DETAILED DESCRIPTION

The present invention relates to a process for the manufacture of copolyamides comprising less than 50 mol-% of units of hexamethylene terephthalamide (6T) and more than 50 mol-% of units of hexamethylene adipamide (66). Preferably the copolyamide comprises from 30 to 40 mol-% of polyamide 6T units and from 70 to 60 mol-% of polyamide 66 units. Most preferably the copolyamide comprises about 35 mol-% of polyamide 6T units and about 65 mol-% of polyamide 66 units, which leads to a copolyamide with excellent properties. The copolyamides produced by this process typically have a melting point in the range from from 272°C to 290°C, or from 274 to 288°C, or from 276 to 285°C, or from 278 to 282°C , preferably about 280°C.

The process usually begins with providing adipic acid, terephthalic acid and hexamethylene diamine and/or the respective salts thereof. Adipic acid, terephthalic acid, hexamethylene diamine and/or the respective salts thereof are referred to as "monomers" herein. The monomers are typically provided in an aqueous solvent. The aqueous solvent comprises water. The aqueous solvent may comprise at least 10% (v/v) water and at least one solvent other than water. The solvent other than water may be an organic solvent, e.g. methanol, ethanol, or the like. Preferably, the aqueous solvent comprises at least 50% (v/v) water, more preferably at least 90% (v/v) water. In the most preferred embodiment the aqueous solvent is water, i.e. water is the sole solvent, and the monomer composition does not comprise a solvent other than water. Accordingly, it is preferred that the composition(s) comprising the monomers comprise(s) water as the sole solvent.

In one embodiment of the present invention the monomers are provided in two separate solutions. In this embodiment the first aqueous solution comprises hexamethylene diamine and adipic acid or the respective salts thereof. The total concentration of monomers in the first aqueous solution is typically in the range from 40 to 68 wt.-%, preferably 43 to 64 wt.-%, even more preferably 46 to 60 wt.-%, yet even more preferably 49 to 56 wt.-%, most preferably from 50 wt.-% to 55 wt.-%. The second aqueous solution comprises hexamethylene diamine and terephthalic acid or the respective salts thereof. The total concentration of monomers in the second aqueous solution is usually less than 50 wt.-%, preferably 32 to 48 wt.-%, even more preferably 35 to 45, yet even more preferably 38 to 42 wt.-%, most preferably about 40 wt.-%. The molar ratio of hexamethylene diamine to adipic acid in the first aqueous solution is preferably from 0.9 to 1.1, more preferably from 0.95 to 1.05, most preferably about 1, i.e. the first aqueous solution comprises about equimolar amounts of hexamethylene diamine and adipic acid. The molar ratio of hexamethylene diamine to terephthalic acid in the second aqueous solution is preferably from 0.9 to 1.1, more preferably from 0.95 to 1.05, most preferably about 1, i.e. the second aqueous solution comprises about equimolar amounts of hexamethylene diamine and terephthalic acid.

Preferably the first aqueous solution is has a temperature of 50 to 65 °C, more preferably of 55 to 60 °C It is further preferred that the second aqueous solution has a temperature of 75 to 105 °C, more preferably of 80 to 100 °C, most preferably of 85 to 95 °C.

The method of the present invention comprises introducing the aqueous solvent and the monomers adipic acid, terephthalic acid and hexamethylene diamine or salts thereof into an evaporator to obtain a mixture, whereby the aqueous solvent is preferably water. Though, the aqueous solvent is not limited to water and any aqueous solvent suitable for dissolving the monomers or salts thereof can be used.

The type of evaporator is not particularly limited. Suitable evaporators include, but are not limited to, vessel evaporators, static evaporators, non-static evaporators such as external heat exchangers, natural circulation evaporators, forced circulation evaporators, rising film evaporators, falling film evaporators, thin film evaporators, and short path evaporators.

In one embodiment of the present invention the monomers are introduced into the evaporator in an amount that the molar ratio of terephthalic acid to adipic acid in the mixture obtained by introduction into the evaporator is less than 1. Preferably, the molar ratio of terephthalic acid to adipic acid in the mixture is from 0.25 to 0.75, or from 0.3 to 0.7. More preferably, the molar ratio of terephthalic acid to adipic acid in the mixture is from about 0.43 to about 0.67, or from 0.47 to 0.61. Most preferably, the molar ratio of terephthalic acid to adipic acid in the mixture is from 0.52 to 0.56, e.g. about 0.54.

Optionally, a chain-limiting agent can be added to the mixture. By adapting the concentration of the chain-limiting agent the properties of the obtained copolymer can be varied, exemplarily with respect to its rigidity and fluidity. In one embodiment of the present invention the mixture in the evaporator comprises a chain-limiting agent at a concentration of 50 to 100 mmol/kg of the final polymer, preferably of 60 to 80 mmol/kg of the final polymer, more preferably of about 70 mmol/kg of the final polymer. Excellent properties are obtained when the chain-limiting agent is acetic acid.

Usually it is advantageous to also introduce an anti-foaming agent into the mixture. In one embodiment of the present invention the mixture in the evaporator comprises an anti-foaming agent at a concentration of 5 to 25 ppm, more preferably 10 to 20 ppm, even more preferably 12 to 18 ppm, most preferably 14 to 16 ppm. Best results are achieved when the anti-foaming agent is a polydimethylsiloxane-based compound. Though, the anti-foaming agent is not limited to polydimethylsiloxane-based compounds and any suitable anti-foaming agent can be used.

The content of the evaporator is referred to herein as a mixture. In the next step the mixture in the evaporator is concentrated to obtain a concentrated mixture comprising from 20 to 30 wt.-% solvent and from 70 to 80 wt-% other constituents, preferably about 25 wt.-% solvent and about 75% other constituents. The other constituents are any constituents in the mixture other than the aqueous solvent. The other constituents in particular include the monomers and optionally the chain limiting agent and the anti-foaming agent.

This concentration is achieved by evaporation of at least part of the solvent, which may include heating the mixture up to the boiling point of the aqueous solvent. During the evaporation the temperature in the evaporator increases, and reaches a range from 148 to 162 °C. Preferably the temperature reached in the evaporator is in the range from 150 to 160 °C. Most preferably the temperature reached in the evaporator is in the range from 152 to 162 °C. During the evaporation the pressure in the evaporator is typically in the range from 0.22 to 0.26 MPa. Preferably the pressure in the evaporator is in the range from 0.23 to 0.25 MPa. Most preferably the pressure in the evaporator is about 0.24 MPa which ensures proper operation of the evaporator and provides copolyamides with excellent properties.

The process of the invention is carried out as a batch polymerization process. Batch polymerization processes typically utilize a polymerization reactor or autoclave which is heated to an appropriate process temperature. Accordingly, the concentrated mixture is then transferred into an autoclave. The type of autoclave is not particularly limited and includes any polymerization autoclave or reactor that can tolerate temperatures above 200°C and pressures of at least 1.2 MPa, preferably at least 1.5 MPa. The autoclave may be an unstirred autoclave. It is preferred, however, that a stirred or agitated autoclave is used. Suitable autoclaves are known to one skilled in the art. Heating of such autoclaves may involve the use of closed loop heating systems which transfer heat from a heating fluid into the reactor. Heating systems can include internal heating coils, external jacketed systems, or other similar heat transfer systems. The nominal volume of the reactor may range from 1,000 to 10,000 liters.

The monomers are polymerized in the autoclave at a pressure of at least 1.2 MPa, preferably of at least 1.5 MPa by increasing the temperature up to a temperature which is higher than the melting point of the copolyamide. In another embodiment of the present invention the maximum polymerization temperature is at least 285 °C. For example, the maximum polymerization temperature may be in the range from 285 to 290 °C. Excellent properties are obtained when the maximum polymerization temperature is about 288 °C. In an alternative embodiment of the present invention the maximum polymerization temperature exceeds the melting point of the copolyamide by 3°C to 12°C. In another alternative embodiment of the present invention the maximum polymerization temperature exceeds the melting point of the copolyamide by 5°C to 10°C. The high-pressure polymerization in the autoclave typically has a duration of from 60 to 120 minutes, preferably from 75 to 100 minutes.

The pressure in the autoclave can be slowly released by decompression to atmospheric pressure. During the decompression the temperature is preferably in the range from 288 to 293 °C, whereby the polymerization can continue. The duration of this decompression step or pressure release phase is preferably from 15 minutes to 90 minutes, more preferably from 25 minutes to 45 minutes.

After the pressure has been released the polymerization can continue in the autoclave for another 5 to 30minutes, preferably for 10 to 20 minutes. The final temperature which is reached at the end of this finishing phase is usually within the range from 290 to 300°C, preferably from 291 to 295 °C.

The autoclave may then be put under nitrogen pressure, e.g. in the range from 0.2 to 1.0 MPa, preferably 0.4 to 0.8 MPa or 0.5 to 0.6 MPa. In a last step the obtained copolyamide is granulated. The molten polymer may be extruded from the autoclave in the form of strands that can be cooled and cut to obtain granules. After the granulation the autoclave is ready for a new polymerization batch.

The total duration of the polymerization steps is less than 9 h. Preferably the total duration of the polymerization steps is less than 8 hours or less than 7 hours or even less than 6 hours. The total duration of the polymerization steps may range from 2 to 8 hours, or from 2.5 to 7 hours, or from 3 to 6 hours.

Surprisingly, no degradation products are observed which would lead to encrustations in the autoclave. Thus, it is a special advantage of the present invention that no encrustations are observed in the autoclave after the polymerization process so that the autoclave can immediately be used for a subsequent batch process for the preparation of the copolyamide. In a preferred embodiment the process of the invention can be repeated at least 12 times without interruption for maintenance or cleaning of the autoclave. More preferably, the process of the invention can be repeated at least 20 times or at least 30 times without interruption for maintenance or cleaning of the autoclave.

The obtained copolyamide preferably has no opacity. As it is known from other copolyamides, the product has high strength and high temperature resistance and is therefore excellently suitable for preparation of plastic compounds dedicated to further use in injection-molding or extrusion processes.

The copolyamide obtained by the process of the invention typically has a number average molecular weight of 8,000 to 15,000, preferably 8,000 to 12,000, even more preferably 9,000 to 11,000 kg/kmol. The number average molecular weight is calculated from the end groups concentrations (carboxyl end groups, amino end groups and also capped ends by chain-limiting agent).

The copolyamide obtained by the process of the invention typically has a viscosity index in the range from 60 to 120 mL/g, preferably from 70 to 100 mL/g, even more preferably from 75 to 85 mL/g. The viscosity index refers to the viscosity index of polyamides, determined in 90% formic acid according to International Standard ISO 307.

### EXAMPLES

### Example 1 (invention)

A copolyamide 66/6T is prepared in industrial-size batch equipment comprising an external recirculation-type evaporator and an agitated autoclave, both evaporator and autoclave being equipped for heat supply via appropriate means, and for venting of evaporated process vapors under pressure controlled conditions. The following manufacturing process is used:
- Aqueous solution of N-Salt (stoichiometric aqueous solution of hexamethylenediamine and adipic acid) at 52% by weight is loaded into the evaporator together with aqueous solution of 6T Salt (stoichiometric aqueous solution of hexamethylenediamine and terephthalic acid) at 40% by weight, the proportion of both solutions being chosen so as to obtain a composition (mixed Salt) containing a molar fraction of 6T Salt equal to 35% in the resulting mixed Salt. Some additives are also added in the Salt mixture: acetic acid (1.65 mole per 100 moles of mixed Salt), hexamethylene diamine (1.19 mole per 100 moles of mixed Salt), and a silicone-based antifoam (20 ppm with regard to mixed Salt solution).
- The solution is heated in the evaporator up to boiling point at pressure equal to 0.24 MPa (absolute pressure), and additional heat is supplied to concentrate the salt solution by evaporation under constant pressure of 0.24 MPa, until a global concentration of 78% by weight is reached.
- Heating is then stopped in the evaporator, and the homogeneous, concentrated salt solution is subsequently transferred to the autoclave over a period of time of about 4 min.
- The solution in the autoclave is heated and autogenous pressure rises up to 1.85 MPa. Heating is continued with pressure maintained at 1.85 MPa, the process steam in excess being vented through a control valve. During this pressurized polymerization phase the mass temperature continuously rises from 220°C to 288°C. This global phase of polymerization under pressure lasts approximately 85 min.
- When mass temperature reaches 288°C, pressure is then gradually reduced down to atmospheric pressure (0.10 MPa), with additional heating. The duration of this pressure release phase is 35 min; the polymer mass temperature continuously increases and reaches 293°C at the end of the pressure release phase.
- The reactor is then maintained under atmospheric pressure for 7 minutes, and the temperature reached by the polymer at the end of this finishing phase is 294°C.
- Agitator is then stopped, and the autoclave is put under nitrogen pressure of about 0.5 up to 0.6 MPa. Molten polymer is extruded from the autoclave in the form of strands, that are cooled with water and cut in an appropriate pelletizing equipment so as to obtain solid polymer granules. At the end of this pelletizing phase, the autoclave is brought to pressure slightly above atmospheric. This global pelletizing phase lasts about 30 min. At the end of the pelletizing phase, the autoclave is ready for a new polymerization batch.

A polymerization campaign of 12 batches in series was thus carried out in the autoclave, with no interruption between two successive batches. DSC (Differential Scanning Calorimetry) measurements were performed on several polymer samples. Value found for the melting point (peak) is 280±2°C.

During the whole duration of the production campaign, no contamination of the molten polymer by any material resulting from polymer accumulation and degradation in the equipment (i.e. autoclave, including casting valve and die head) was observed. In addition, during the subsequent polymerization campaigns of other polyamide grades prepared in the same autoclave, the contamination level was still considered low, particularly with no need of abnormally frequent maintenance operations (e.g. die plate change, or chemical cleaning of the autoclave).

### Example 2 (comparative example)

The process of Example 1 is repeated with the main difference being that the pressure release phase in autoclave is started when mass temperature reaches 268°C instead of 288°C. Some other process parameters are modified accordingly:
- Duration of polymerization under pressure is 61 min instead of 85 min
- Mass temperature at the end of the 35 min pressure release phase is 288°C instead of 293°C
- Finishing phase under atmospheric pressure lasts 14 min instead of 7 min, and polymer mass temperature at the end of this phase is 291°C.

This longer finishing phase offsets the slightly lower finishing temperature and shorter polymerization time under pressure, thus leading to a final polymer with same molecular mass as in Example 1.

All other process features remained unchanged vs. Example 1.

A polymerization campaign of 8 batches in series was thus carried out in the autoclave, with no interruption between two successive batches. DSC (Differential Scanning Calorimetry) measurements were performed on several polymer samples. Value found for melting point (peak) is 281±2°C.

Starting from the second batch of the campaign, the release of degraded polymer particles was observed during the pelletizing phase of the process. In some cases the contamination level in the resulting pelletized polymer was considered too high and the batch had to be discarded. It was also found some accumulation of this degraded material in the equipment, particularly the extrusion valve and die plate, leading to considerable trouble during the pelletizing phase. Consequence was frequent interruption of pelletizing phase for cleaning of the pelletizing machine, and global poor cut quality of the granules. The release of degraded material and contamination phenomenon was also observed during campaigns of other polyamide grades following the polyamide 66/6T campaign, and production had to be stopped at abnormally high rate for maintenance operations such as, for example, die plate change. Finally, a chemical cleaning of the autoclave appeared to be necessary. All these maintenance operations led to additional production costs and also to impaired plant productivity.

### Example 3 (comparative example)

The process of Example 1 is repeated with the main difference being that the pressure release phase in autoclave is started when mass temperature reaches 277°C instead of 288°C. Some other process parameters are modified accordingly:
- Duration of polymerization under pressure is 70 min instead of 85 min
- Mass temperature at the end of the 35 min pressure release phase is 290°C instead of 293°C
- Finishing phase under atmospheric pressure lasts 12 min instead of 7 min, and polymer mass temperature at the end of this phase is 292°C. This longer finishing phase offsets the slightly lower finishing temperature and shorter polymerization time under pressure, thus leading to a final polymer with same molecular mass as in Example 1.

All other process features remained unchanged vs. Example 1.

A polymerization campaign of 10 batches in series was thus carried out in the autoclave, with no interruption between two successive batches. DSC (Differential Scanning Calorimetry) measurements were performed on several polymer samples. Value found for melting point (peak) is 281±2°C.

Some contamination of the final pelletized product by residues of degraded polymer accumulated in the autoclave was observed, particularly for the last batches of the polymerization campaign, thus leading to a polymer product of globally lower quality. Also, to avoid similar contamination of other polymer grades during following campaigns, production was stopped, and a chemical cleaning operation of the autoclave was carried out. This cleaning operation led to additional production costs and also to impaired plant productivity.

### Example 4 (comparative example)

Polyamide 66 is prepared in the same industrial-size batch equipment as that used in Example 1. The following manufacturing process is used:
- Aqueous solution of N-Salt (stoichiometric aqueous solution of hexamethylenediamine and adipic acid) at 52% by weight is loaded into the evaporator. The quantity of N-Salt loaded corresponds to the same filling level in the autoclave as that of Example 1, when the concentrated N-Salt (or concentrated mixed Salt in case of Example 1) is transferred to the autoclave. Some additives are also added in the N-Salt solution: acetic acid (0.64 mole per 100 moles of N-Salt), hexamethylene diamine (0.43 mole per 100 moles of N-Salt), and a silicone-based antifoam (20 ppm with regard to N-Salt solution).
- The solution is heated in the evaporator up to boiling point at pressure equal to 0.24 MPa (absolute pressure), and additional heat is supplied to concentrate the salt solution by evaporation under constant pressure of 0.24 MPa, until a global concentration of 87% by weight is reached.
- Heating is then stopped in the evaporator, and the homogeneous, concentrated salt solution is subsequently transferred to the autoclave over a period of time of about 4 min.
- The solution in the autoclave is heated and autogenous pressure rises up to 1.85 MPa. Heating is continued with pressure maintained at 1.85 MPa, the process steam in excess being vented through a control valve. During this pressurized polymerization phase the mass temperature continuously rises from 222°C to 245°C. This global phase of polymerization under pressure lasts approximately 40 min.
- When mass temperature reaches 245°C, pressure is then gradually reduced down to atmospheric pressure (0.10 MPa), with additional heating. The duration of this pressure release phase is 35 min; the polymer mass temperature continuously increases and reaches 269°C at the end of the pressure release phase.
- The reactor is then maintained under atmospheric pressure for 30 minutes and the temperature reached by the polymer at the end of this finishing phase is 278°C.
- Agitator is then stopped, and the autoclave is put under nitrogen pressure of about 0.4 MPa. Molten polymer is extruded from the autoclave in the form of strands, then cooled with water and cut in an appropriate pelletizing equipment so as to obtain solid polymer granules. At the end of this pelletizing phase, the autoclave is brought to pressure slightly above atmospheric. This global pelletizing phase lasts about 25 min. At the end of the pelletizing phase, the autoclave is ready for a new polymerization batch.

A polymerization campaign of more than 100 batches in series was thus carried out in the autoclave, with no interruption between two successive batches. DSC (Differential Scanning Calorimetry) measurements were performed on several polymer samples. Value found for the melting point (peak) is 262±2°C.

During the whole duration of the production campaign, no contamination of the molten polymer by any material resulting from polymer accumulation and degradation in the equipment (i.e. autoclave, including casting valve and die head) was observed. Thus the effect observed in example 1 appears to be specific to the copolyamide 66/6T.

Results obtained are summarized in Table 1 below.

| | Example 1 (invention) | Example 2 (comparative) | Example 3 (comparative) | Example 4 (comparative) |
|---|---|---|---|---|
| Polymer | PA 66/6T 65/35 | PA 66/6T 65/35 | PA 66/6T 65/35 | PA 66 |
| Temperature (°C) (end pressure phase) | 288 | 268 | 277 | 245 |
| Polymer melting point (°C) | 280 | 281 | 281 | 262 |
| Trouble linked to release of degraded polymer | No | Yes (++) | Yes (+) | No |

## Claims

1. A process for the production of a copolyamide comprising less than 50 mol % of units of hexamethylene terephthalamide, said process comprising:
(a) introducing an aqueous solvent and the monomers adipic acid, terephthalic acid and hexamethylene diamine, or salts thereof, into an evaporator to obtain a mixture;
(b) concentrating the mixture obtained in step (a) in the evaporator by evaporation of at least part of the solvent, to obtain a concentrated mixture;
(c) transferring the concentrated mixture obtained in step (b) into an autoclave;
(d) polymerizing the monomers in the autoclave at a pressure of at least 1.2 MPa by increasing the temperature up to a temperature which is higher than the melting point of the copolyamide;
(e) releasing the pressure in the autoclave by decompression;
(f) allowing the polymerization to continue in the autoclave; and
(g) granulating the copolyamide obtained in step (f);
wherein
the total duration of the steps (d) + (e) + (f), in particular of steps (c) + (d) + (e) + (f) + (g) is less than 9 h.

2. The process according to claim 1, wherein the solvent is water.

3. The process of claim 1 or 2, wherein the process further comprises providing, prior to step (a), a first aqueous solution comprising equimolar amounts of hexamethylene diamine and adipic acid at a total concentration of 40 to 68 wt.-%, and a second aqueous solution comprising equimolar amounts of hexamethylene diamine and terephthalic acid at a total concentration of less than 50 wt.-%; and introducing the first aqueous solution and the second aqueous solution into the evaporator in step (a).

4. The process according to any one of claims 1 to 3, wherein the monomers are introduced into the evaporator in a way that the molar ratio of terephthalic acid to adipic acid in the mixture obtained in step (a) is less than 1.

5. The process according to any one of claims 1 to 4, wherein the mixture obtained in step (a) further comprises a chain-limiting agent, at a concentration of 50 to 80 mmol/kg of the final polymer, preferably about 70 mmol/kg of the final polymer.

6. The process according to claim 5, wherein said chain-limiting agent is acetic acid.

7. The process of any one of the preceding claims, wherein the mixture obtained in step (a) further comprises an anti-foaming agent, preferably at a concentration of 10 to 20 ppm.

8. The process according to claim 7, wherein the anti-foaming agent is a polydimethylsiloxane-based compound.

9. The process according to any one of the preceding claims, wherein the final temperature which is higher than the melting point of the copolyamide is at least 288°C.

10. The process according to any one of the preceding claims, wherein the maximum temperature during the decompression is in a range from 288 to 295°C, and/or wherein during step (e) the temperature of the reaction mixture obtained from step (d) is higher than the melting point of the copolyamide.

11. The process according to any one of the preceding claims, wherein step (f) is carried out for 10 to 20 minutes with a final temperature of from 291 to 295°C.

12. The process according to any of claims 1 to 10, wherein the pressure in the autoclave during step (d) is at least 1.5 Mpa.

13. The process according to any one of the preceding claims, wherein the melting-point of the produced copolyamide is from from 272 to 290°C, or from 274 to 288°C, or from 276 to 285, preferably about 280°C.

14. The process according to any one of the preceding claims, wherein the copolyamide comprises from 30 to 40 mol-% of polyamide 6T units and 60 to 70 mol-% of polyamide 66 units.

15. The process according to any one of the preceding claims, wherein the copolyamide comprises 35 mol-% of polyamide 6T units and 65 mol-% of polyamide 66 units.
